# EUROPÄISCHE PATENTANMELDUNG

(11) **EP 0 893 688 A1**
(43) Veröffentlichungstag der Anmeldung: **27.01.1999**
(21) Anmeldenummer: 98111811.0
(22) Anmeldetag: 26.06.1998
(51) Int. Cl.: G01N 27/12, G01N 27/407

(54) **Heizleiter-Schicht mit veränderlichem elektrischen Widerstand und Verfahren zu ihrer Herstellung**

(30) Priorität: 24.07.1997 DE 19731900
(71) Anmelder: Heraeus$Sensor-Nite International, 1105 BH Amsterdam (NL)
(72) Erfinder: Häfele, Edelbert, Dr., 76228 Karlsruhe (DE)
(74) Vertreter: Kühn, Hans-Christian

(57) **Zusammenfassung**

Die Erfindung betrifft eine leitfähige Heizleiter-Schicht auf einem elektrisch isolierenden Substrat, wobei die leitfähige Heizleiter-Schicht entlang eines Strompfades einen vom spezifischen Widerstand entsprechend der chemischen Zusammensetzung des Materials der leitfähigen Heizleiter-Schicht und von der Größe der Querschnittsfläche der leitfähigen Heizleiter-Schicht abhängigen elektrischen Gesamtwiderstand aufweist. Eine derartige leitfähige Heizleiter-Schicht kann beispielsweise eine strukturierte Heizerschicht für einen Gassensor sein. Um kontinuierliche, nicht sprunghafte Übergänge im elektrischen Widerstand zu gewährleisten, weist die leitfähige Heizleiter-Schicht einen entlang des Strompfades veränderlichen spezifischen Widerstand und/oder eine entlang des Strompfades variierende Größe der Querschnittsfläche auf. Zur Herstellung der leitfähigen Heizleiter-Schicht wird ein Platin und/oder oxidische Verbindungen aufweisendes Beschichtungsmaterial im Dickschicht- oder Dünnschichtverfahren lokal unterschiedlich auf ein elektrisch isolierendes Substrat aufgetragen.

## Beschreibung

Die Erfindung betrifft eine leitfähige Heizleiter-Schicht auf einem elektrisch isolierenden Substrat, wobei die leitfähige Heizleiter-Schicht entlang eines Strompfades einen vom spezifischen Widerstand entsprechend der chemischen Zusammensetzung des Materials der leitfähigen Heizleiter-Schicht und von der Größe der Querschnittsfläche der leitfähigen Heizleiter-Schicht abhängigen elektrischen Gesamtwiderstand aufweist. Weiterhin betrifft die Erfindung ein Verfahren zur Herstellung der leitfähigen Heizleiter-Schicht mit lokal veränderlichem elektrischen Widerstand, sowie deren Verwendung.

Aus DE 43 11 851 A1 und aus DE 44 08 504 A1 sind im Zusammenhang mit Heizerstrukturen für Gassensoren leitfähige Schichten bekannt, die durch zwei unterschiedlich dimensionierte Leiterbahnen einen in begrenzten Partien auf dem Keramiksubstrat unterschiedlichen elektrischen Widerstand aufweisen. Aufgrund dieser Anordnung kann das Substrat bzw. die darauf befindliche Schaltung in einzelnen Feldern unterschiedlich stark aufgeheizt werden. Die beiden Leiterbahnen werden dazu entweder einzeln oder in Reihe bzw. parallel geschaltet angesteuert. Da die Leiterbahnlänge L und der Leiterbahnquerschnitt Q in die Berechnung des elektrischen Widerstandes (hier auch als Gesamtwiderstand bezeichnet) R nach der Formel R = ρ L/Q eingehen (mit ρ als spezifischer Widerstand), kann durch eine Änderung von L und Q im Leiterbahn-Layout der elektrische Widerstand des Heizers variiert werden. Für Heizer mit verengtem Leiterbahnquerschnitt erhöht sich der Widerstand R, was bei konstantem Strom zu partiell erhöhter Leistung führt, die als Heizleistung umgesetzt wird. Dieses Design führt jedoch nicht selten zu Schädigungen im Leiterbahnmaterial oder am Substrat. Die technische Lösung in DE 43 11 851 mit zwei Heizern unterschiedlicher Geometrie und damit spezifischer Heizleistung führt zu einer kritischen Stelle mit hoher thermischer Belastung zwischen Pumpzelle und Meßelektroden; bei DE 44 08 504 ergibt sich die vergleichbare Stelle zwischen der ersten und der zweiten Meßelektrode, an der Nahtstelle zwischen den zwei getrennten Heizern, da hier beim Betrieb eine sprunghafte Änderung in der Heizleistung eintritt. Die Anordnung von mehreren Heizerstukturen ist zudem eine technisch sehr aufwendige Lösung und überdies bei kleiner Bauteilgröße nur begrenzt ausführbar.

Es ist daher Aufgabe der Erfindung mittels einer einzigen Widerstandsstruktur eine leitfähige Heizleiter-Schicht mit kontinuierlichen, nicht sprunghaften Übergängen im elektrischen Widerstand zu schaffen, damit extreme Temperaturgradienten vermieden werden.

Erfindungsgemäß wird die vorgenannte Aufgabe dadurch gelöst, daß die leitfähige Heizleiter-Schicht einen entlang des Strompfades veränderlichen spezifischen Widerstand aufweist. Die Änderung des Widerstandes erfolgt kontinuierlich, ohne sprunghafte Übergänge, so daß beispielsweise in einem geraden Leiterbahnabschnitt von insgesamt 12 mm Länge einzelne Teilabschnitte Widerstände im Bereich von 0,15 Ω / mm bis 1,0 Ω / mm aufweisen. Die erfindungsgemäße leitfähige Heizleiter-Schicht zeigt also feinabgestimmte Bereiche mit höherem oder niedrigerem Widerstand, die bei Stromfluß zu entsprechender sich kontinuierlich ändernder Temperatur entlang des Strompfades führen.

In der leitfähigen Heizleiter-Schicht liegen neben Platin als gut leitfähigem Material oxidische Verbindungen wie beispielsweise Al₂O₃, SiO₂, oder der Erdalkalioxide oder deren Mischoxide oder Gemische vor, die den spezifischen Widerstand der Mischung erhöhen. Die kontinuierliche Änderung des elektrischen Widerstands kommt dadurch zustande, daß der Anteil von Platin mindestens 30 Gew.% beträgt und in einzelnen, kleinsten Teilabschnitten der leitfähigen Heizleiter-Schicht auch bis zu 100 % betragen kann, der Anteil der oxidischen Verbindungen in der Leiterbahnstruktur der leitfähigen Heizleiter-Schicht jedoch bei maximal 70 Gew. % liegt.

Zur Herstellung der erfindungsgemäßen leitfähigen Heizleiter-Schicht mit veränderlichem elektrischem Widerstand wird ein Verfahren beansprucht, bei dem die leitfähige Heizleiter-Schicht durch ein Dickschicht- oder Dünnschichtverfahren auf ein elektrisch isolierendes Substrat aufgebracht wird, wobei entlang des Strompfades eine lokal unterschiedliche Beschichtung mit einem Platin und/oder oxidische Verbindungen aufweisenden Beschichtungsmaterial erfolgt und somit eine Änderung des spezifischen Widerstands entlang dem Strompfad der leitfähigen Heizleiter-Schicht erreicht wird. Sowohl bei Dickschicht- als auch bei Dünnschichtverfahren wird üblicherweise zur Strukturierung mit Druck- oder Abschattmasken gearbeitet, so daß auf diesem Weg die Querschnittsfläche bzw. Geometrie der leitfähigen Heizleiter-Schicht beeinflußt werden kann. Mittels einer entsprechenden Gestaltung derartiger Masken mit stetigen Verengungen oder Erweiterungen der Leiterbahnen oder auch durch die Art oder Dauer der Beschichtung nimmt so die leitfähige Heizleiter-Schicht die gewünschte Abmessung, wie Länge, Breite und Dicke an. Bei der Querschnittsfläche der leitfähigen Heizleiter-Schicht muß auch die Porosität berücksichtigt werden, da die Porosität ebenfalls eine Einflußgröße für den resultierenden Gesamtwiderstand der Schicht ist.

Bei einer Beschichtung im Dickschichtverfahren kommen Drucktechniken, wie Siebdrucken infrage, aber auch das Aufsprühen. Durch ein- oder mehrmaliges Beschichten mit diesen Auftragstechniken, oder auch durch Aufdrucken und Aufsprühen im Wechsel kann in lokal begrenzten Bereichen die Geometrie der leitfähigen Heizleiter-Schicht beeinflußt werden. Werden außerdem in ihrer Zusammensetzung unterschiedliche Pasten verwendet, so wird dadurch der spezifische Widerstand variiert.

Sowohl für das Aufdrucken, als auch für das Aufsprühen wird mehr oder weniger pastöses Beschichtungsmaterial verwendet, das neben einem Anpastmittel Platin und/oder eine oxidische Verbindung aufweist. Bei sowohl Platin als auch oxidische Verbindungen aufweisenden Pasten liegt der Anteil der oxidischen Verbindung im Bereich von 2 bis 65 Gew %, je nachdem welcher spezifische Widerstand für die leitfähige Heizleiter-Schicht erzielt werden soll.

Vorteilhafterweise werden bei der Anwendung des Siebdruckverfahrens zur Aufbringung der leitfähigen Heizleiter-Schicht auf ein elektrisch isolierendes Substrat die Siebdruckparameter während des Druckvorgangs variiert. Dies führt gezielt zu lokalen Änderungen der Leiterbahndicke, was eine Änderung des elektrischen Widerstandes in diesem Teilbereich der Leiterbahn nach sich zieht. Wird beispielsweise das Sieb während des Druckens in Druckrichtung minimal entlastet, so steigt die auf das Substrat übertragenen Pastenmenge und damit die Schichtdikke. Entsprechend kann auch durch mehrmaliges Beschichten, sei es durch Drucken oder Aufsprühen, der Leiterbahnquerschnitt und damit der elektrische Widerstand in dieser Partie beeinflußt werden.

Nach dem Auftragen der Schicht im Dickschichtverfahren auf ein elektrisch isolierendes Substrat, beispielsweise aus Al₂O₃, erfolgt ein Einbrand, der zweckmäßigerweise bei einer Temperatur durchgeführt wird, die um mindestens 100 °C höher liegt als die geplante Betriebstemperatur. Damit wird gewährleistet, daß beim späteren Einsatz der leitfähigen Heizleiter-Schicht, zum Beispiel als Heizer für Gassensoren, kein wesentliches Nachsintern der Schicht zu erwarten ist.

Wird zur Herstellung der leitfähigen Heizleiter-Schicht mit veränderlichem elektrischem Widerstand ein Dünnschichtverfahren ausgewählt, so werden dabei nacheinander Schichten aus Platin und aus einer oxidischen Verbindung, beispielsweise Al₂O₃, auf ein Substrat aufgebracht. Als Dünnschichtverfahren kommt Aufdampfen oder Aufsputtern infrage, wobei die lokal unterschiedliche Materialzusammensetzung der leitfähigen Heizleiter-Schicht durch Abschattung einzelner Flächenbereiche der Schicht während des Beschichtungsprozesses gewährleistet wird. Werden derartige Masken während des Beschichtens bewegt, so entstehen kontinuierliche Übergange in der Schichtfolge und in der Konzentration des Platins bzw. der oxidischen Verbindung.

Leitfähige Heizleiter-Schichten der erfindungsgemäßen Art finden bevorzugt Verwendung als Heizerstrukturen für elektrochemische Sensoren, insbesondere Gassensoren. Durch die Einstellung unterschiedlicher Temperaturfelder an einer einzigen Heizerstruktur wird die Anordnung mehrerer Heizelemente, wie sie aus dem Stand der Technik bekannt sind, vermieden. Als weitere Verwendungsmöglichkeit der leitfähigen Heizleiter-Schicht sei auf miniaturisierte, in Teilbereichen durch mehr oder weniger Platinanteil katalytisch wirksame Sensorelektroden verwiesen.

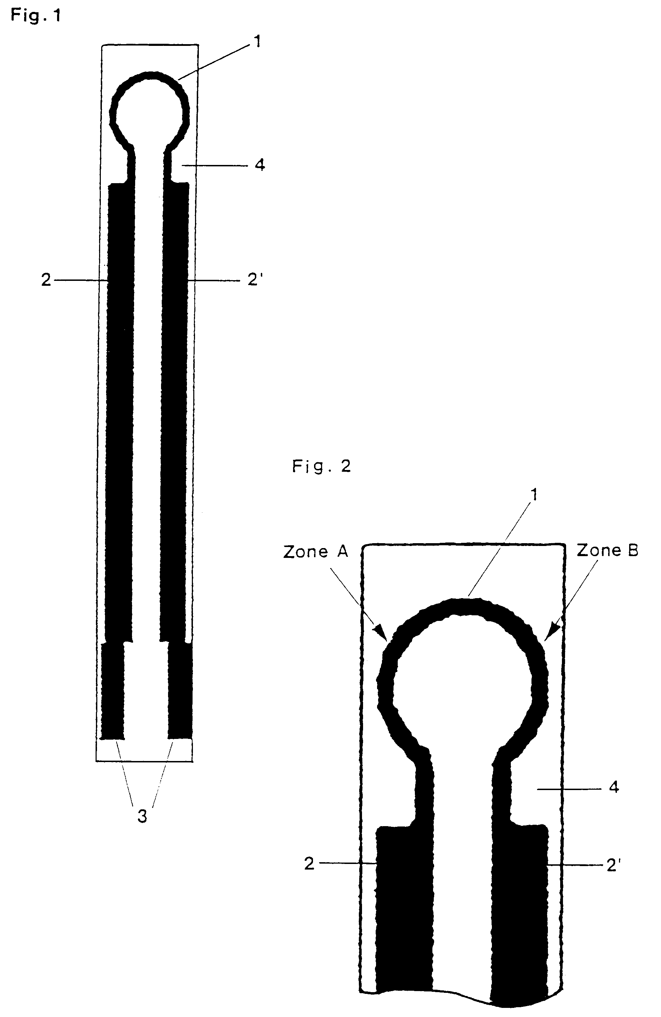

Zur näheren Erläuterung der Erfindung dient folgendes, anhand der Figuren 1 und 2 erläutertes Ausführungsbeispiel.

Dabei zeigt
- Figur 1: eine leitfähige, strukturierte Heizleiter-Schicht als Heizerstruktur mit Zuleitungen auf einem elektrisch isolierenden Substrat;
- Figur 2: einen Ausschnitt der Heizerstruktur aus Figur 1 mit mehreren, gekennzeichneten Heizzonen.

Gemäß Figur 1 befindet sich eine leitfähige, strukturierte Heizleiter-Schicht, ausgebildet als Heizerstruktur 1 mit zwei geraden Zuleitungen 2, 2' und Kontaktflächen 3 auf einem elektrisch isolierenden Substrat 4 aus Aluminiumoxid. Das Substrat 4 hat eine Länge von etwa 50 mm und eine Breite von 5 mm. Auf dem oberen Teil des Substrats 4 ist in einem Abschnitt von ca. 7 mm die Heizerstruktur 1 angeordnet, die einen nach unten hin geöffneten Kreis mit einem jeweils sichelförmigen linken und rechten Schenkel beschreibt, wobei jeder Schenkel in eine gerade und etwa 1,5 mm breite Zuleitung 2 übergeht. Die Querschnittsfläche der gegenüber den Zuleitungen 2, 2' schmäleren Heizerstruktur 1 beträgt bei einer Schichtdicke von ca. 10 µm 0,005 mm². Das Material für die Heizerstruktur 1 enthält über ihrer gesamten Länge gleichmäßig 65 Gew.% Pt und 35 Gew.% einer Mischung der Oxide von Ba, Al und Si. Durch Kontaktieren an den Kontaktflächen 3 wird eine Spannung von 9,6 V angelegt, so daß entlang der Zuleitungen 2 , 2' und der Heizerstruktur 1 ein Strom fließt. Die dabei abgegebene Energie setzt sich in Wärme um, d.h. die leitfähige, strukturierte Heizleiter-Schicht und insbesondere die Heizerstruktur 1 mit ihrem kleinen Querschnitt erhitzt sich. Innerhalb der annähernd kreisförmig geführten Heizerstruktur 1 wird die Temperatur an je drei gleichmäßig am linken und am rechten Schenkel der Heizerstruktur 1 verteilten Punkten unter Verwendung des Bildes einer Thermokamera ermittelt. Es ergibt sich dabei für den linken und den rechten Schenkel der Heizerstruktur 1 gleichmäßig eine Temperatur von 544°C ± 3°C.

Um den elektrischen Widerstand bzw. die Heizleistung der leitfähigen Heizleiter-Schicht, hier ausgebildet als Heizerstruktur 1, zu verändern, wird im Sprühverfahren ein Platinresinat (RP-10003, W.C. Heraeus GmbH) auf den linken Schenkel der annähernd kreisförmigen, offenen Heizerstruktur 1 aufgebracht. Nach anschließendem Einbrennen des Platinresinats bei ca. 1100° C wird erneut bei einer angelegten Spannung von 9,6 V der Temperaturverlauf entlang der Heizerstruktur 1 ermittelt. Für den linken Schenkel (Figur 2 "Zone A") der Heizerstruktur 1 wird nun eine Temperatur von 580°C ± 3°C gemessen, der rechte Schenkel (Figur 2 "Zone B") heizt sich auf 548°C ± 3°C auf.
Beim Erhöhen der angelegten Spannung auf 15 V werden die Unterschiede deutlicher. Der linke Schenkel der Heizerstruktur 1 zeigt dann eine Temperatur von 960°C, der rechte Schenkel heizt sich nur auf 890°C auf. Zur Verdeutlichung dieses Sachverhalts ist in Figur 2 der linke und der rechte Schenke der Heizerstruktur 1 mit "Zone A" bzw. "Zone B" gekennzeichnet.

## Patentansprüche

1. Leitfähige Heizleiter-Schicht auf einem elektrisch isolierenden Substrat, wobei die leitfähige Heizleiter-Schicht entlang eines Strompfades einen vom spezifischen Widerstand entsprechend der chemischen Zusammensetzung des Materials der leitfähigen Heizleiter-Schicht und von der Größe der Querschnittsfläche der leitfähigen Heizleiter-Schicht abhängigen elektrischen Gesamtwiderstand aufweist, dadurch gekennzeichnet, daß die leitfähige Heizleiter-Schicht einen entlang des Strompfades veränderlichen spezifischen Widerstand.

2. Leitfähige Heizleiter-Schicht nach Anspruch 1, dadurch gekennzeichnet, daß das Material der leitfähigen Heizleiter-Schicht im Wesentlichen aus Platin gebildet wird oder Platin und eine oxidische Verbindung aus der Gruppe Al₂O₃ , SiO₂ , oder der Erdalkalioxide oder deren Mischoxide oder Gemische enthält, wobei der Platinanteil mindestens 30 Gew.% und der Anteil der oxidischen Verbindung maximal 70 Gew.% beträgt.

3. Verfahren zur Herstellung einer leitfähigen Heizleiter-Schicht mit veränderlichem elektrischen Widerstand auf einem elektrisch isolierenden Substrat, wobei die leitfähige Heizleiter-Schicht entlang eines Strompfades einen vom spezifischen Widerstand entsprechend der chemischen Zusammensetzung des Materials der leitfähigen Heizleiter-Schicht und von der Geometrie der leitfähigen Heizleiter-Schicht abhängigen elektrischen Gesamtwiderstand aufweist, wobei die leitfähige Heizleiter-Schicht durch ein Dickschicht- oder Dünnschichtverfahren aufgebracht wird, dadurch gekennzeichnet, daß entlang des Strompfades eine lokal unterschiedliche Beschichtung mit einem Platin und/oder oxidische Verbindungen aufweisenden Beschichtungsmaterial erfolgt, wobei bei einer Beschichtung im Dickschichtverfahren eine neben einem Anpastmittel Platin und/oder oxidische Verbindungen enthaltende Dickschichtpaste einmal, mehrmals oder im Wechsel aufgedruckt oder aufgesprüht wird.

4. Verfahren zur Herstellung einer leitfähigen Heizleiter-Schicht nach Anspruch 3, dadurch gekennzeichnet, daß bei der Platin und oxidische Verbindungen aufweisenden Dickschichtpaste der Anteil der oxidischen Verbindung je nach gewünschtem spezifischen Widerstand im Bereich von 2 bis 65 Gew. % liegt.

5. Verfahren zur Herstellung einer leitfähigen Heizleiter-Schicht nach Anspruch 3 oder 4, dadurch gekennzeichnet, daß bei einer Beschichtung im Dickschichtverfahren ein Siebdruckverfahren ausgewählt wird, bei dem sich die Siebdruckparameter während des Druckvorgangs verändern lassen.

6. Verfahren zur Herstellung einer leitfähigen Heizleiter-Schicht nach einem der Ansprüche 3 bis 5, dadurch gekennzeichnet, daß nach der Beschichtung im Dickschichtverfahren, insbesondere nach dem Beschichten durch Aufsprühen, ein Einbrand bei einer um mindestens 100 °C höheren Temperatur als der späteren Betriebstemperatur erfolgt.

7. Verfahren zur Herstellung einer leitfähigen Heizleiter-Schicht nach Anspruch 3, dadurch gekennzeichnet, daß bei einer Beschichtung im Dünnschichtverfahren nacheinander Platin oder oxidische Verbindungen als Heizleiter-Schicht aufgetragen werden, wobei einzelne Abschnitte der Heizleiter-Schicht mittels beweglicher Abschattmasken abgedeckt werden.

8. Verwendung der leitfähigen Heizleiter-Schicht nach Anspruch 1 auf einem elektrisch isolierenden Substrat, als Elektrode für elektrochemische Sensoren, insbesondere für Gassensoren.
